# EUROPEAN PATENT APPLICATION

(11) **EP 4 742 395 A1**
(43) Date of publication of application: **13.05.2026**
(21) Application number: 25204613.1
(22) Date of filing: 25.09.2025
(51) Int. Cl.: H01M 50/213, H01M 50/503, H01M 50/516, H01M 50/509, H01M 50/298

(54) **BUS BAR AND BATTERY PACK**

(30) Priority: 08.11.2024 KR 20240157973
(71) Applicant: SAMSUNG SDI CO., LTD., Yongin-si, Gyeonggi-do 17084 (KR)
(72) Inventor: PARK, Sang Hun, 16678 Suwon-si (KR)
(74) Representative: Marks & Clerk LLP

(57) **Abstract**

A bus bar and a battery pack are disclosed. A battery pack includes a housing, a plurality of first battery cells each including a first positive electrode terminal and a first negative electrode terminal, a plurality of second battery cells each including a second positive electrode terminal and a second negative electrode terminal, a first bus bar connecting the first negative electrode terminals of the plurality of first battery cells, a second bus bar connecting the second positive electrode terminals of the plurality of second battery cells, and a third bus bar connecting the first positive electrode terminals of the first battery cells and the second negative electrode terminals of the second battery cells, and at least one of the first bus bar, the second bus bar, or the third bus bar is deformable according to positions of the first battery cells and the second battery cells.

## Description

### BACKGROUND

### 1. Field

Aspects of embodiments of the present disclosure relate to a bus bar and a battery pack.

### 2. Description of the Related Art

Generally, as the demand for portable electronic products, such as laptops, camcorders, and mobile phones increases rapidly and the commercialization of robots, electric cars, and the like begins in earnest, research on high-performance secondary batteries capable of repeated charging and discharging is actively underway. In particular, lithium secondary batteries are widely used as an energy source of various electronic products due to their high energy density and operating voltage and excellent preservation and state-of-health (SOH) characteristics.

Among lithium secondary batteries, a cylindrical secondary battery includes an electrode assembly having a cylindrical shape, a can having a cylindrical shape and accommodating the electrode assembly and an electrolyte, and a cap assembly coupled to an opening of the can to seal the can and allowing current generated in the electrode assembly to flow to an external device. The cylindrical secondary battery has a structure in which the can, which is negatively charged, and the cap assembly, which is positively charged, are insulated from each other by a gasket.

If cylindrical secondary batteries constitute a pack, welds connected to an electrode connection body or a controller may be placed horizontal to a longitudinal direction of the cylindrical secondary batteries or placed parallel to a body direction. Here, it is desirable to maintain flatness at the time of laser welding or resistance welding.

The above-described information disclosed in the technology that forms the background of the present disclosure is provided to improve understanding of the background of the present disclosure, and thus may include information that does not constitute the related art.

### SUMMARY

According to an aspect of embodiments of the present disclosure a bus bar and a battery pack capable of, in a process in which a plurality of cylindrical battery cells are connected in series and parallel, securing flatness in welding and improving workability and productivity of processes are provided.

The above and other aspects and features of the present disclosure will be described in or will be apparent from the following description of some embodiments of the present disclosure.

According to one or more embodiments of the present disclosure, a bus bar includes a first parallel connection part; and a first parallel extension part extending from the first parallel connection part in a first direction, wherein the first parallel connection part includes a first parallel center plate; a first parallel link plate extending in parallel to a second direction, intersecting the first direction, from the first parallel center plate; and a first link adjustment part on the first parallel link plate to be length-adjustable in the second direction.

The first link adjustment part may define a U-shaped or V-shaped bend.

The first parallel extension part may include a first parallel side plate connected to the first parallel connection part and arranged parallel to the first direction; a first parallel upper plate extending from the first parallel side plate and arranged to intersect the first parallel side plate; and a first side plate adjustment part on the first parallel side plate to be length-adjustable in the first direction.

The first side plate adjustment part may be bent in a zigzag shape.

According to one or more embodiments of the present disclosure, a battery pack includes a housing; a plurality of first battery cells accommodated in the housing and each including a first positive electrode terminal and a first negative electrode terminal; a plurality of second battery cells accommodated in the housing and each including a second positive electrode terminal and a second negative electrode terminal; a first bus bar connecting the first negative electrode terminals of the plurality of first battery cells; a second bus bar connecting the second positive electrode terminals of the plurality of second battery cells; and a third bus bar connecting the first positive electrode terminals of the first battery cells and the second negative electrode terminals of the second battery cells, wherein at least one of the first bus bar, the second bus bar, or the third bus bar is deformable according to positions of the first battery cells and the second battery cells.

The first positive electrode terminals and the second negative electrode terminals may be located toward a side in a first direction, and the first negative electrode terminals and the second positive electrode terminals may be located toward another side in the first direction.

The first bus bar may include a first parallel connection part connecting the first negative electrode terminals, which neighbor each other, in parallel; and a first parallel extension part extending from the first parallel connection part in the first direction.

The plurality of first battery cells may be arranged in a second direction intersecting the first direction, and the first parallel connection part may include a first parallel center plate; a first parallel link plate extending in parallel to the second direction from the first parallel center plate and linked to the first negative electrode terminals; and a first link adjustment part on the first parallel link plate to be length-adjustable in the second direction.

The first link adjustment part may define a U-shaped or V-shaped bend.

The first parallel extension part may include a first parallel side plate connected to the first parallel connection part and arranged parallel to the first direction; a first parallel upper plate extending from the first parallel side plate and arranged to intersect the first parallel side plate; and a first side plate adjustment part on the first parallel side plate to be length-adjustable in the first direction.

The first side plate adjustment part may be bent in a zigzag shape.

The second bus bar may include a second parallel connection part connecting the second positive electrode terminals, which neighbor each other, in parallel; and a second parallel extension part extending from the second parallel connection part in the first direction.

The plurality of second battery cells may be arranged in the second direction intersecting the first direction, and the second parallel connection part may include a second parallel center plate; a second parallel link plate extending in parallel to the second direction from the second parallel center plate and linked to the second positive electrode terminals; and a second link adjustment part on the second parallel link plate to be length-adjustable in the second direction.

The second link adjustment part may define a U-shaped or V-shaped bend.

The second parallel extension part may include a second parallel side plate connected to the second parallel connection part and arranged parallel to the first direction; a second parallel upper plate extending from the second parallel side plate and arranged to intersect the second parallel side plate; and a second side plate adjustment part on the second parallel side plate to be length-adjustable in the first direction.

The second side plate adjustment part may be bent in a zigzag shape.

The third bus bar may include a plurality of third serial parts connecting the first positive electrode terminals and the second negative electrode terminals in series; a third connection part connecting the plurality of third serial parts; and one or more third adjustment parts on the third connection part to be length-adjustable in the second direction intersecting the first direction.

The first battery cells and the second battery cells may be arranged to face each other in a third direction intersecting the first direction and the second direction, and the third serial parts may each include a third serial center plate; a third serial link plate extending in parallel to the third direction from the third serial center plate and linked to each of the first positive electrode terminals and the second negative electrode terminals; and a third link adjustment part on the third serial link plate to be length-adjustable in the third direction.

The third adjustment part may define a U-shaped or V-shaped bend.

The battery pack may further include an elastic member in the housing and supporting the plurality of first battery cells and the plurality of second battery cells to compensate for heights thereof.

Features of one embodiment or aspect may be combined or used with features of another embodiment or aspect. For example, the bus bars of the second aspect may have the features of the bus bars of the first aspect.

At least some of the above and other features of the invention are set out in the claims.

### BRIEF DESCRIPTION OF THE DRAWINGS

The drawings attached to this specification illustrate some embodiments of the present disclosure, and further describe aspects and features of the present disclosure together with the detailed description of the present disclosure. However, the present disclosure should not be construed as being limited to the drawings.
FIG. 1 is a view schematically illustrating a bus bar according to an embodiment of the present disclosure.
FIG. 2 is a top view schematically illustrating a first parallel connection part according to an embodiment of the present disclosure.
FIG. 3 is a side view schematically illustrating the first parallel connection part according to an embodiment of the present disclosure.
FIG. 4 is a side view schematically illustrating a first parallel extension part according to an embodiment of the present disclosure.
FIG. 5 is a view schematically illustrating a battery pack according to an embodiment of the present disclosure.
FIG. 6 is a front perspective view schematically illustrating an interior of the battery pack according to an embodiment of the present disclosure.
FIG. 7 is a bottom perspective view schematically illustrating the interior of the battery pack according to an embodiment of the present disclosure.
FIG. 8 is a view schematically illustrating a second bus bar according to an embodiment of the present disclosure.
FIG. 9 is a top view schematically illustrating a second parallel connection part according to an embodiment of the present disclosure.
FIG. 10 is a side view schematically illustrating the second parallel connection part according to an embodiment of the present disclosure.
FIG. 11 is a side view schematically illustrating a second parallel extension part according to an embodiment of the present disclosure.
FIG. 12 is a perspective view schematically illustrating a third bus bar according to an embodiment of the present disclosure.
FIG. 13 is a top view schematically illustrating the third bus bar according to an embodiment of the present disclosure.
FIG. 14 is a side view schematically illustrating a third serial part according to an embodiment of the present disclosure.
FIG. 15 is a side view schematically illustrating a third connection part according to an embodiment of the present disclosure.
FIG. 16 is a perspective view schematically illustrating a block according to an embodiment of the present disclosure.
FIG. 17 is a view in which an elastic member is included in a battery pack according to an embodiment of the present disclosure.
FIG. 18 is a view in which a connection body is included in a battery pack according to an embodiment of the present disclosure.
FIG. 19 is a perspective view schematically illustrating a state before welding and coupling of the connection body according to an embodiment of the present disclosure.
FIG. 20 is a cross-sectional view schematically illustrating a state after welding and coupling of the connection body according to an embodiment of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

In describing multiple embodiments of the present disclosure below, repeated description of components that are the same or corresponding to each other throughout multiple embodiments may be omitted. For example, when a configuration that is the same or corresponding to a configuration disclosed in one embodiment is disclosed in another embodiment, description of the configuration corresponding thereto may be omitted in description of the other embodiment, and configurations with differences from the one embodiment may be mainly described.

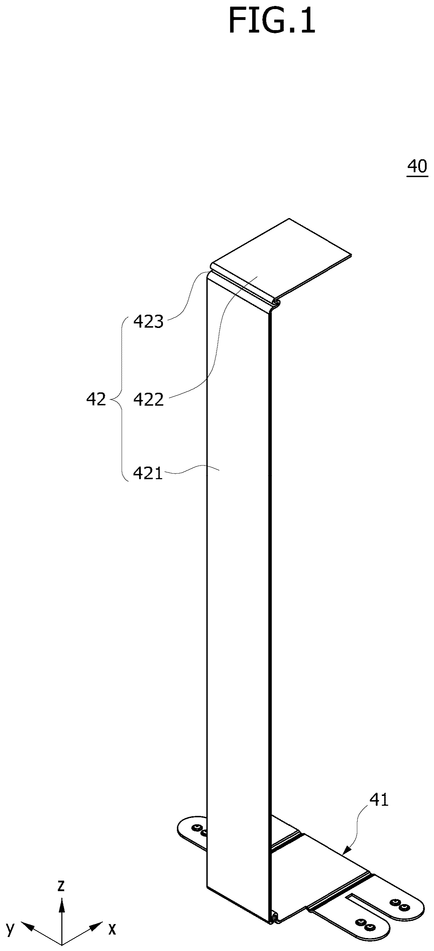

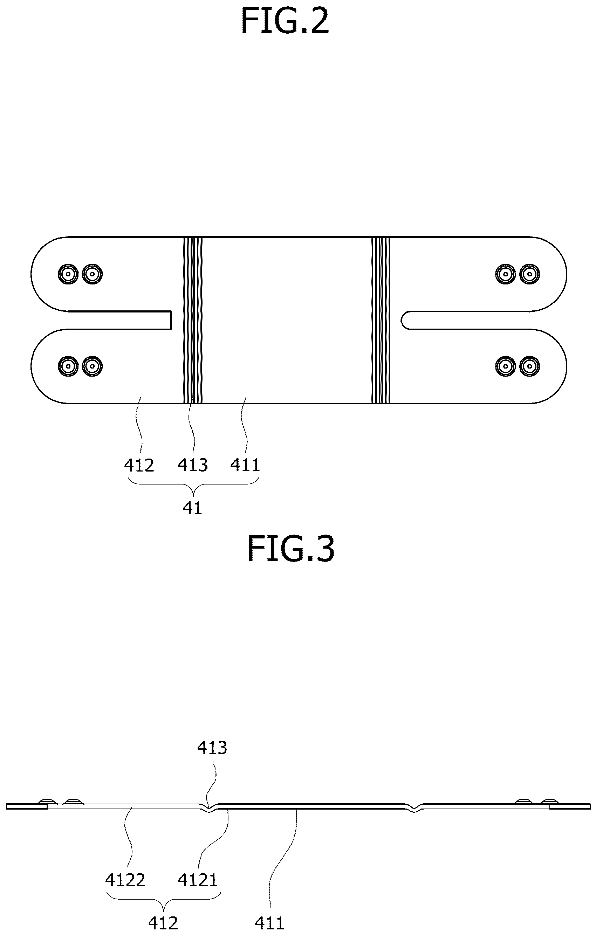

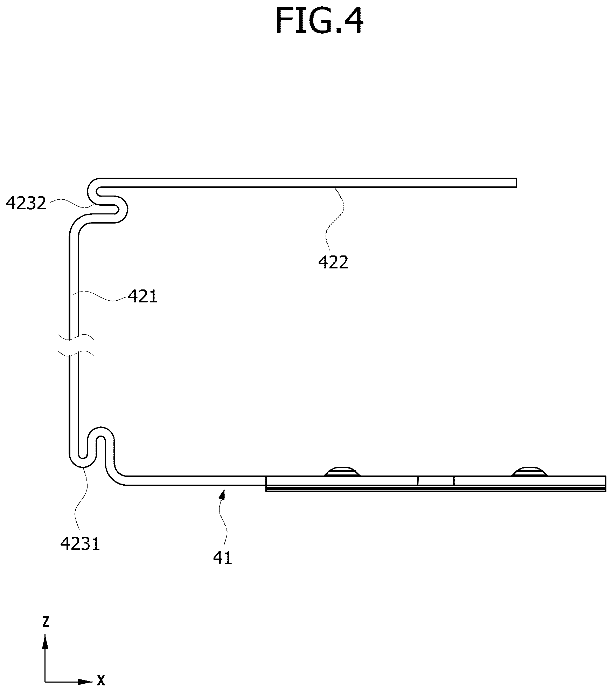

FIG. 1 is a view schematically illustrating a bus bar according to an embodiment of the present disclosure, FIG. 2 is a top view schematically illustrating a first parallel connection part according to an embodiment of the present disclosure; FIG. 3 is a side view schematically illustrating the first parallel connection part according to an embodiment of the present disclosure; and FIG. 4 is a side view schematically illustrating a first parallel extension part according to an embodiment of the present disclosure.

Referring to FIGS. 1 to 4, a bus bar 40 may include a first parallel connection part 41 and a first parallel extension part 42.

The first parallel connection part 41 may form an exterior of a side of the bus bar 40 and may support the first parallel extension part 42. The first parallel connection part 41 may provide an electrical connection between the bus bar 40 and an electronic device, such as a battery cell.

The first parallel extension part 42 may extend from the first parallel connection part 41 in a first direction. The first direction may indicate a direction that is parallel to a z-axis and extends upward based on FIG. 1. In an embodiment, the first parallel extension part 42 may be integrally formed with the first parallel connection part 41 and may be electrically linked, or electrically connected, to a surface thereof. In an embodiment, a portion of the first parallel extension part 42 may be electrically linked to a circuit board, such as a protection circuit module (PCM) or a battery management system (BMS).

The first parallel connection part 41 may include a first parallel center plate 411, a first parallel link plate 412, and a first link adjustment part 413.

The first parallel center plate 411 may form an exterior of a central portion of the first parallel connection part 41. In an embodiment, the first parallel center plate 411 may have a form of a flat plate that is perpendicular to the first direction.

One or more first parallel link plates 412 may extend in parallel to a second direction intersecting the first direction from the first parallel center plate 411. In an embodiment, the second direction may indicate a direction that is parallel to the y-axis based on FIG. 1. That is, the first parallel link plates 412 may extend from both, or opposite, sides of the first parallel center plate 411 and may have a length along the y-axis. Two first parallel link plates 412 may extend from both, or opposite, sides of the first parallel center plate 411 and may be linked to a first negative electrode terminal 22. The first parallel link plates 412 may each include a first plate 4121 and a second plate 4122. The first plate 4121 may extend from the first parallel center plate 411, and the second plate 4122 may extend from the first plate 4121.

The first link adjustment part 413 may be formed on the first parallel link plates 412 and may be length-adjustable in the second direction. The first link adjustment part 413 may have a bent shape to be height-adjustable. In an embodiment, the first link adjustment part 413 may be formed in a process of molding the first parallel link plates 412. In an embodiment, the first link adjustment part 413 may be formed by postprocessing after molding of the first parallel link plates 412.

With the first link adjustment part 413 as a boundary, the first plate 4121 extending from the first parallel center plate 411 may be disposed at a side, and the second plate 4122 may be disposed at another side. In an embodiment, the first link adjustment part 413 may be formed to be inclined upward from the first plate 4121. In this way, the second plate 4122 may be disposed higher than the first plate 4121. The height of the first plate 4121 may be adjusted by adjusting an angle of inclination of the first link adjustment part 413.

In an embodiment, the first link adjustment part 413 may form a U-shaped bend or a V-shaped bend. Such a bent structure of the first link adjustment part 413 may be height-adjustable by being deformed due to an external force.

The first parallel extension part 42 may include a first parallel side plate 421, a first parallel upper plate 422, and a first side plate adjustment part 423.

The first parallel side plate 421 may be connected to the first parallel connection part 41 and may be disposed in parallel to the first direction. The first parallel side plate 421 may extend upward along the z-axis from the first parallel center plate 411. The length of the first parallel side plate 421 may correspond to a vertical length of a first battery cell 20.

The first parallel upper plate 422 may extend from the first parallel side plate 421, may protrude in a direction intersecting the first parallel side plate 421, and may be disposed above the first battery cell 20. The first parallel upper plate 422 may extend in the x-axis direction from an upper end of the first parallel side plate 421. A portion of the first parallel upper plate 422 may be a welding target region.

One or more first side plate adjustment parts 423 may be formed on the first parallel side plate 421 and may have a bent shape to be length-adjustable in the first direction. The first side plate adjustment parts 423 may be formed on at least one of the upper end or a lower end of the first parallel side plate 421.

In an embodiment, the first side plate adjustment part 423 may have a shape that is bent multiple times. For example, the first side plate adjustment part 423 may be formed to have a zigzag shape. In an embodiment, the first side plate adjustment part 423 may be bent two or three times.

As shown in FIG. 4, a first side plate lower adjustment part 4231 disposed on the lower end of the first parallel side plate 421 may have a shape that is bent to have overlapping portions along the x-axis, thereby allowing the length of the first parallel side plate 421 to be adjustable.

A first side plate upper adjustment part 4232 disposed on the upper end of the first parallel side plate 421 may have a shape that is bent to have overlapping portions along the z-axis, thereby allowing the length of the first parallel side plate 421 to be adjustable or allowing the height of the first parallel upper plate 422 to be adjustable.

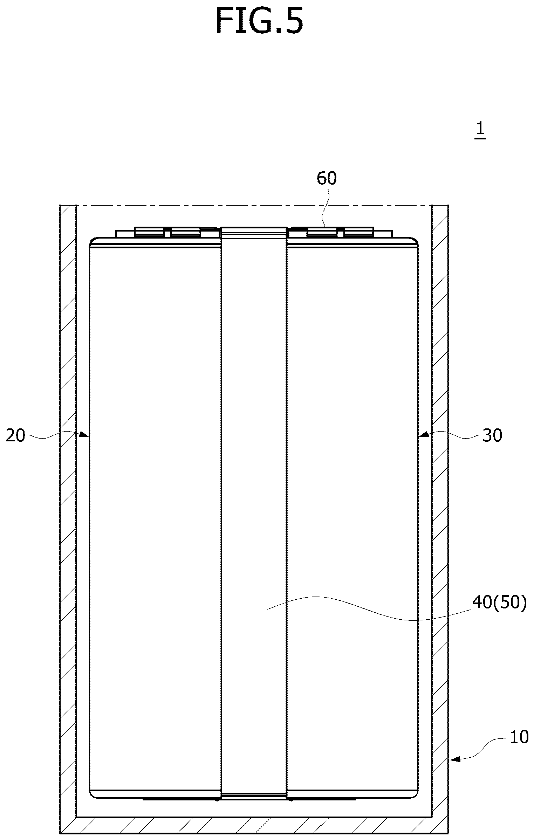

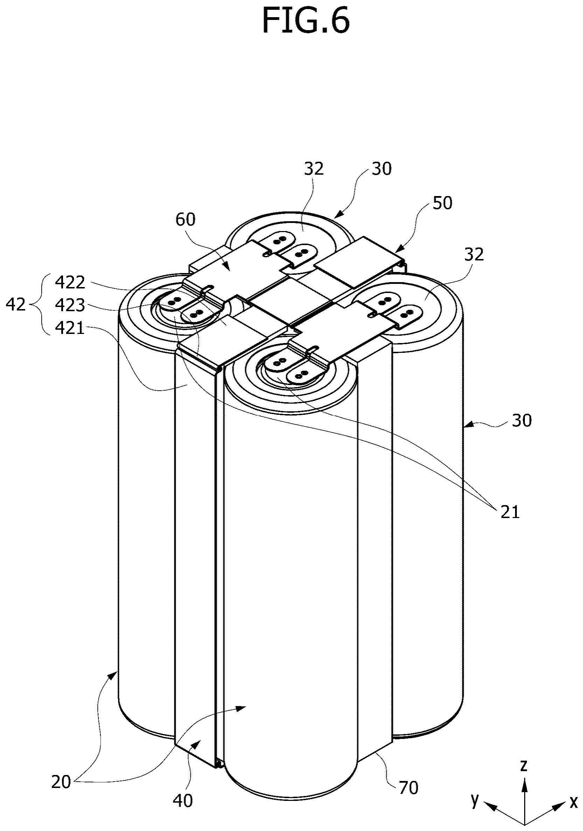

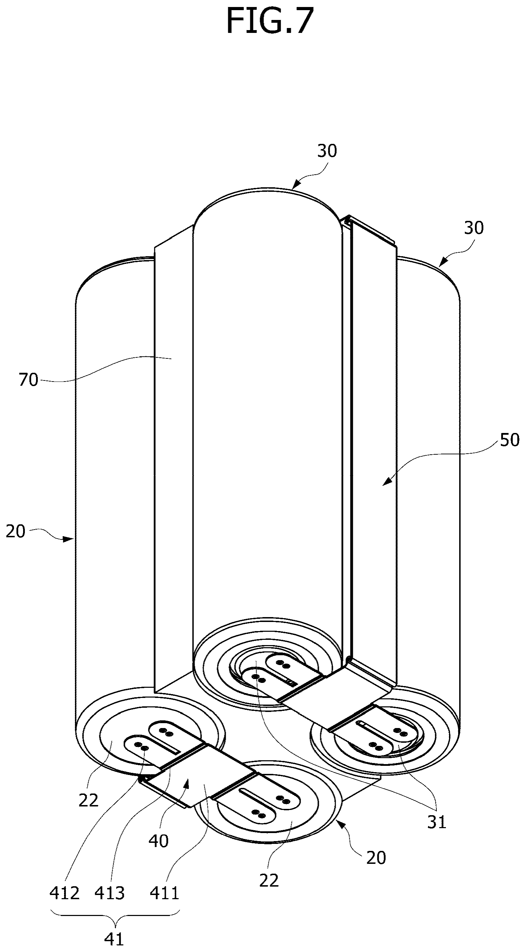

FIG. 5 is a view schematically illustrating a battery pack according to an embodiment of the present disclosure; FIG. 6 is a front perspective view schematically illustrating an interior of the battery pack according to an embodiment of the present disclosure; and FIG. 7 is a bottom perspective view schematically illustrating the interior of the battery pack according to an embodiment of the present disclosure. Referring to FIGS. 5 to 7, a battery pack 1 according to an embodiment of the present disclosure includes a housing 10, a first battery cell 20, a second battery cell 30, a first bus bar 40, a second bus bar 50, and a third bus bar 60.

The housing 10 may have a shape of a container with an open top. In an embodiment, the housing 10 may be made of a resin material. A plurality of first battery cells 20 and a plurality of second battery cells 30 may be embedded or accommodated in the housing 10. In an embodiment, a plurality of housings 10 may be disposed consecutively.

The plurality of first battery cells 20 may be embedded or accommodated in the housing. In an embodiment, an electrode assembly having a jelly roll form may be embedded or accommodated in each of the first battery cells 20, and each of the first battery cells 20 may be a cylindrical secondary battery having a vertical length in the first direction, that is, the z-axis direction. A first positive electrode terminal 21 and a first negative electrode terminal 22 may be provided in each of the first battery cells 20. The first positive electrode terminals 21 may be linked, or connected, to a positive electrode current collector of the electrode assembly, and the first negative electrode terminals 22 may be linked, or connected, to a negative electrode current collector of the electrode assembly.

When two first battery cells 20 disposed to neighbor each other are disposed to each have a length in the first direction, the first positive electrode terminals 21 may be disposed toward a side in the first direction, and the first negative electrode terminals 22 may be disposed toward another side in the first direction. That is, in a state in which the first battery cells 20 stand upright along the z-axis, the first positive electrode terminals 21 may be disposed on an upper portion, and the first negative electrode terminals 22 may be disposed on a lower portion.

The plurality of second battery cells 30 may be embedded or accommodated in the housing. In an embodiment, an electrode assembly having a jelly roll form may be embedded or accommodated in each of the second battery cells 30, and each of the second battery cells 30 may be a cylindrical secondary battery having a vertical length in the z-axis direction. A second positive electrode terminal 31 and a second negative electrode terminal 32 may be provided in each of the second battery cells 30. The second positive electrode terminals 31 may be linked, or connected, to a positive electrode current collector of the electrode assembly, and the second negative electrode terminals 32 may be linked, or connected, to a negative electrode current collector of the electrode assembly.

When two second battery cells 30 disposed to neighbor each other are disposed to each have a length in the first direction, the second negative electrode terminals 32 may be disposed toward a side in the first direction, and the second positive electrode terminals 31 may be disposed toward another side in the first direction. That is, in a state in which the second battery cells 30 stand upright along the z-axis, the second negative electrode terminals 32 may be disposed on an upper portion, and the second positive electrode terminals 31 may be disposed on a lower portion.

Based on FIG. 6, the plurality of first battery cells 20 may be arranged in the second direction intersecting the first direction. The plurality of second battery cells 30 may be arranged in the second direction intersecting the first direction. Two first battery cells 20 may be disposed to face each other in the second direction intersecting the first direction, that is, along the y-axis, and two second battery cells 30 may be disposed to face each other in the second direction intersecting the first direction, that is, along the y-axis. The two first battery cells 20 and the two second battery cells 30 may be disposed to face one another in a third direction intersecting the second direction, that is, along the x-axis.

The first bus bar 40 may connect the first negative electrode terminals 22 provided on the plurality of first battery cells 20. The first bus bar 40 may connect a pair of first battery cells 20 in parallel. The first bus bar 40 may connect the first negative electrode terminals 22 disposed on lower portions of the first battery cells 20 in parallel.

The second bus bar 50 may connect the second positive electrode terminals 31 provided on the plurality of second battery cells 30. The second bus bar 50 may connect a pair of second battery cells 30 in parallel. The second bus bar 50 may connect the second positive electrode terminals 31 disposed on lower portions of the second battery cells 30 in parallel.

The third bus bar 60 may connect the first positive electrode terminals 21 provided on the plurality of first battery cells 20 and the second negative electrode terminals 32 provided on the plurality of second battery cells 30. The third bus bar 60 may connect any one of the two first battery cells 20 and any one of the two second battery cells 30. The third bus bar 60 may connect the other of the two first battery cells 20 and the other of the two second battery cells 30.

In an embodiment, at least any of the first bus bar 40, the second bus bar 50, or the third bus bar 60 is deformable according to positions of the plurality of first battery cells 20 and the plurality of second battery cells 30. The first bus bar 40, the second bus bar 50, and the third bus bar 60 may be length-adjustable in the x-axis direction, length-adjustable in the y-axis direction, or length-adjustable in the z-axis direction.

The first bus bar 40 may be configured the same as the bus bar 40 described above. For example, the first bus bar 40 may include a first parallel connection part 41 and a first parallel extension part 42 as illustrated in FIGS. 1 to 4.

The first parallel connection part 41 may connect two first negative electrode terminals 22 in parallel. The first parallel connection part 41 may be disposed below the two first battery cells 20 and may connect the first negative electrode terminals 22 formed on lower portions of the first battery cells 20 in parallel.

The first parallel extension part 42 may extend upward from the first parallel connection part 41. The first parallel extension part 42 may be disposed at a same height as the third bus bar 60. In an embodiment, the first parallel extension part 42 may be integrally formed with the first parallel connection part 41 and may be electrically linked, or connected, to a surface thereof. In an embodiment, a portion of the first parallel extension part 42 may be electrically linked, or connected, to a circuit board, such as a PCM or a BMS.

The first parallel connection part 41 may include a first parallel center plate 411, a first parallel link plate 412, and a first link adjustment part 413.

The first parallel center plate 411 may be disposed below the pair of first battery cells 20. The first parallel center plate 411 may be disposed between the first negative electrode terminals 22 provided on the first battery cells 20.

One or more first parallel link plates 412 may extend in parallel to the second direction from the first parallel center plate 411 and may be linked, or connected, to the first negative electrode terminals 22. That is, the first parallel link plates 412 may extend from both, or opposite, sides of the first parallel center plate 411 and may have a length along the y-axis. Two first parallel link plates 412 may extend from both, or opposite, sides of the first parallel center plate 411 and may be linked, or connected, to the first negative electrode terminals 22. The first parallel link plates 412 may each include a first plate 4121 and a second plate 4122. The first plate 4121 may extend from the first parallel center plate 411, and the second plate 4122 may extend from the first plate 4121.

The first link adjustment part 413 may be formed on the first parallel link plates 412 and may be length-adjustable in the second direction. The first link adjustment part 413 may have a bent shape to be height-adjustable. In an embodiment, the first link adjustment part 413 may be formed in a process of molding the first parallel link plates 412. In an embodiment, the first link adjustment part 413 may be formed by postprocessing after the molding of the first parallel link plates 412.

With the first link adjustment part 413 as a boundary, the first plate 4121 extending from the first parallel center plate 411 may be disposed at a side, and the second plate 4122 linked to the first battery cell 20 may be disposed at another side. The first link adjustment part 413 may be formed to be inclined upward from the first plate 4121. In this way, the second plate 4122 may be disposed higher than the first plate 4121. The height of the first plate 4121 may be adjusted by adjusting an angle of inclination of the first link adjustment part 413.

In an embodiment, the first link adjustment part 413 may form a U-shaped bend or a V-shaped bend. Such a bent structure of the first link adjustment part 413 may be height-adjustable by being deformed due to an external force.

The first parallel extension part 42 may include a first parallel side plate 421, a first parallel upper plate 422, and a first side plate adjustment part 423.

The first parallel side plate 421 may be connected to the first parallel connection part 41 and may be disposed in the longitudinal direction of the first battery cell 20 to be parallel to the first direction. The first parallel side plate 421 may extend upward along the z-axis from the first parallel center plate 411. In an embodiment, a length of the first parallel side plate 421 may correspond to a vertical length of the first battery cell 20. The first parallel side plate 421 may be disposed to face a space between a pair of first battery cells 20 neighboring each other.

The first parallel upper plate 422 may extend from the first parallel side plate 421, may protrude in a direction intersecting the first parallel side plate 421, and may be disposed above the first battery cell 20. The first parallel upper plate 422 may extend in the x-axis direction from an upper end of the first parallel side plate 421. A portion of the first parallel upper plate 422 may be a welding target region.

One or more first side plate adjustment parts 423 may be formed on the first parallel side plate 421 and may have a bent shape to be length-adjustable in the first direction. The first side plate adjustment parts 423 may be formed on at least one of the upper end or a lower end of the first parallel side plate 421.

In an embodiment, the first side plate adjustment part 423 may have a shape that is bent multiple times. In an embodiment, the first side plate adjustment part 423 may be formed to have a zigzag shape. In an embodiment, the first side plate adjustment part 423 may be bent two or three times.

A first side plate lower adjustment part 4231 disposed on the lower end of the first parallel side plate 421 may have a shape that is bent to have overlapping portions along the x-axis, thereby allowing the length of the first parallel side plate 421 to be adjustable or allowing a distance between the first parallel side plate 421 and the first battery cell 20 to be adjustable.

A first side plate upper adjustment part 4232 disposed on the upper end of the first parallel side plate 421 may have a shape that is bent to have overlapping portions along the z-axis, thereby allowing the length of the first parallel side plate 421 to be adjustable or allowing the height of the first parallel upper plate 422 to be adjustable.

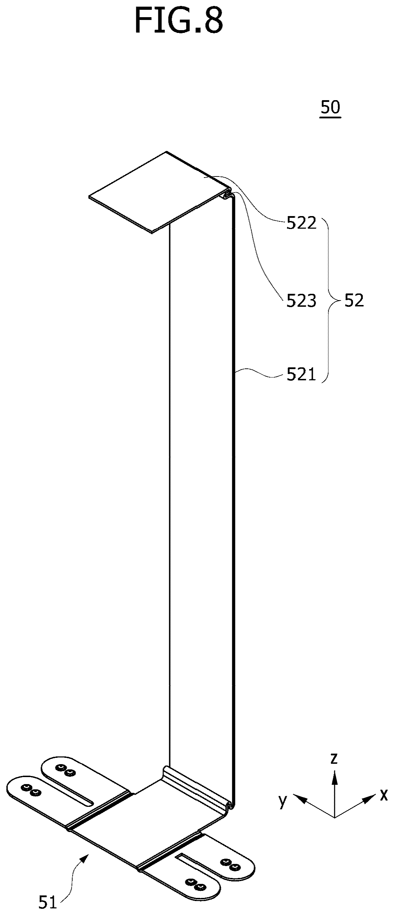

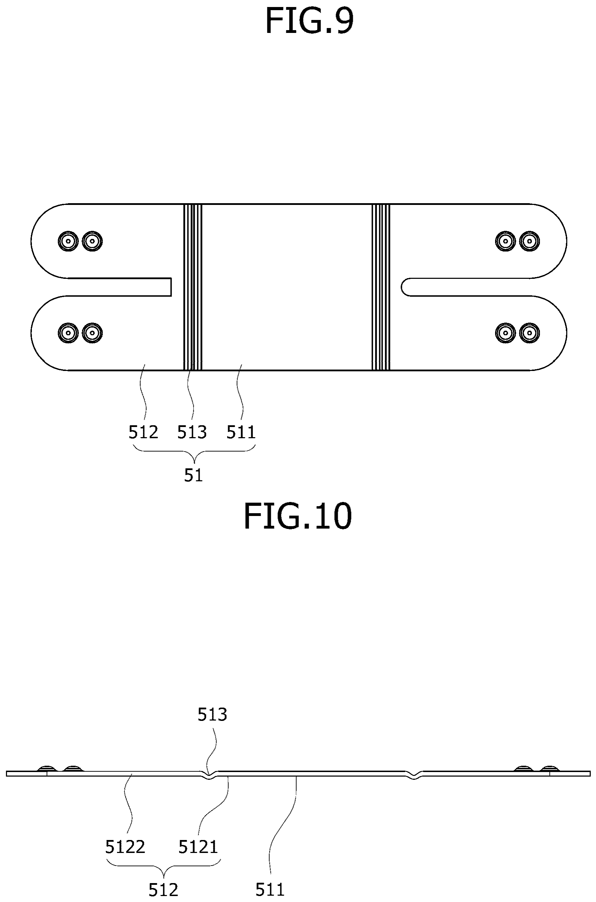

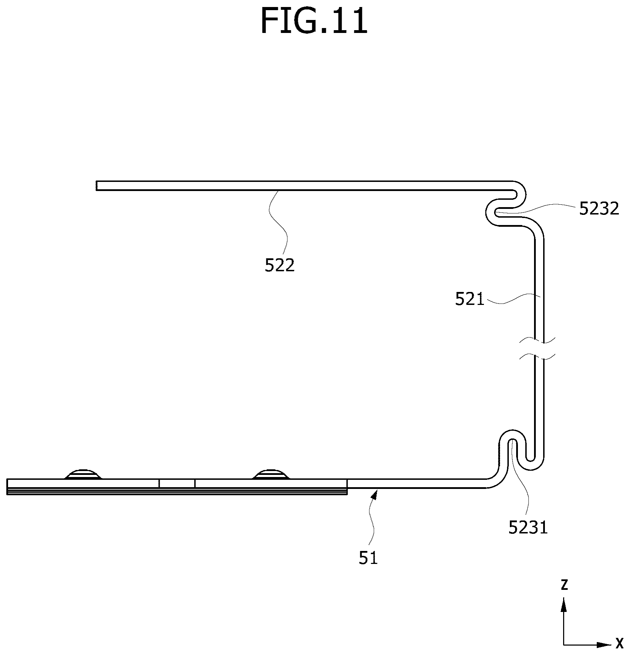

FIG. 8 is a view schematically illustrating a second bus bar according to an embodiment of the present disclosure; and FIG. 9 is a top view schematically illustrating a second parallel connection part according to an embodiment of the present disclosure. FIG. 10 is a side view schematically illustrating the second parallel connection part according to an embodiment of the present disclosure; and FIG. 11 is a side view schematically illustrating a second parallel extension part according to an embodiment of the present disclosure. Referring to FIGS. 6 to 11, in an embodiment, the first bus bar 40 and the second bus bar 50 may be disposed to be symmetrical to each other.

The second bus bar 50 may include a second parallel connection part 51 and a second parallel extension part 52.

The second parallel connection part 51 may connect two second positive electrode terminals 31 (see FIG 7). The second parallel connection part 51 may be disposed below the two second battery cells 30 and may connect the second positive electrode terminals 31 formed on lower portions of the second battery cells 30 in parallel.

The second parallel extension part 52 may extend upward from the second parallel connection part 51. The second parallel extension part 52 may be disposed at the same height as the third bus bar 60. A peak of the second parallel extension part 52 may be the same as a peak of the first parallel extension part 42. In an embodiment, the second parallel extension part 52 may be integrally formed with the second parallel connection part 51 and may be electrically linked, or connected, to a surface thereof. A portion of the second parallel extension part 52 may be electrically linked, or connected, to a circuit board, such as a PCM or a BMS.

The second parallel connection part 51 may include a second parallel center plate 511, a second parallel link plate 512, and a second link adjustment part 513.

The second parallel center plate 511 may be disposed below the pair of second battery cells 30. The second parallel center plate 511 may be disposed between the second positive electrode terminals 31 provided on the second battery cells 30.

One or more second parallel link plates 512 may extend in parallel to the second direction from the second parallel center plate 511 and may be linked, or connected, to the second positive electrode terminals 31. That is, the second parallel link plates 512 may extend from both, or opposite, sides of the second parallel center plate 511 and may have a length along the y-axis. Two second parallel link plates 512 may extend from both, or opposite, sides of the second parallel center plate 511 and may be linked, or connected, to the second positive electrode terminals 31. The second parallel link plates 512 may each include a third plate 5121 and a fourth plate 5122. The third plate 5121 may extend from the second parallel center plate 511, and the fourth plate 5122 may extend from the third plate 5121.

The second link adjustment part 513 may be formed on the second parallel link plates 512, may be length-adjustable in the second direction, and may have a bent shape to be height-adjustable. In an embodiment, the second link adjustment part 513 may be formed in a process of molding the second parallel link plates 512. In an embodiment, the second link adjustment part 513 may be formed by postprocessing after the molding of the second parallel link plates 512.

With the second link adjustment part 513 as a boundary, the third plate 5121 extending from the second parallel center plate 511 may be disposed at a side, and the fourth plate 5122 linked to the second battery cell 30 may be disposed at another side. The second link adjustment part 513 may be formed to be inclined upward from the third plate 5121. In this way, the fourth plate 5122 may be disposed higher than the third plate 5121. The height of the third plate 5121 may be adjusted by adjusting an angle of inclination of the second link adjustment part 513.

In an embodiment, the second link adjustment part 513 may form a U-shaped bend or a V-shaped bend. Such a bent structure of the second link adjustment part 513 may be height-adjustable by being deformed due to an external force.

The second parallel extension part 52 may include a second parallel side plate 521, a second parallel upper plate 522, and a second side plate adjustment part 523.

The second parallel side plate 521 may be connected to the second parallel connection part 51 and may be disposed in the longitudinal direction of the second battery cell 30. The second parallel side plate 521 may extend upward along the z-axis from the second parallel center plate 511. The length of the second parallel side plate 521 may correspond to a vertical length of the second battery cell 30. The second parallel side plate 521 may be disposed to face a space between a pair of second battery cells 30 neighboring each other.

The second parallel upper plate 522 may extend from the second parallel side plate 521 and may be disposed above the second battery cell 30. The second parallel upper plate 522 may extend in the x-axis direction from an upper end of the second parallel side plate 521. A portion of the second parallel upper plate 522 may be a welding target region.

One or more second side plate adjustment parts 523 may be formed on the second parallel side plate 521 and may have a bent shape to be length-adjustable. The second side plate adjustment parts 523 may be formed on at least one of the upper end or a lower end of the second parallel side plate 521.

In an embodiment, the second side plate adjustment part 523 may have a shape that is bent multiple times. In an embodiment, the second side plate adjustment part 523 may be formed to have a zigzag shape. In an embodiment, the second side plate adjustment part 523 may be bent two or three times.

As shown in FIG. 11, a second side plate lower adjustment part 5231 disposed on the lower end of the second parallel side plate 521 may have a shape that is bent to have overlapping portions along the x-axis, thereby allowing the length of the second parallel side plate 521 to be adjustable or allowing a distance between the second parallel side plate 521 and the second battery cell 30 to be adjustable.

A second side plate upper adjustment part 5232 disposed on the upper end of the second parallel side plate 521 may have a shape that is bent to have overlapping portions along the z-axis, thereby allowing the length of the second parallel side plate 521 to be adjustable or allowing the height of the second parallel upper plate 522 to be adjustable.

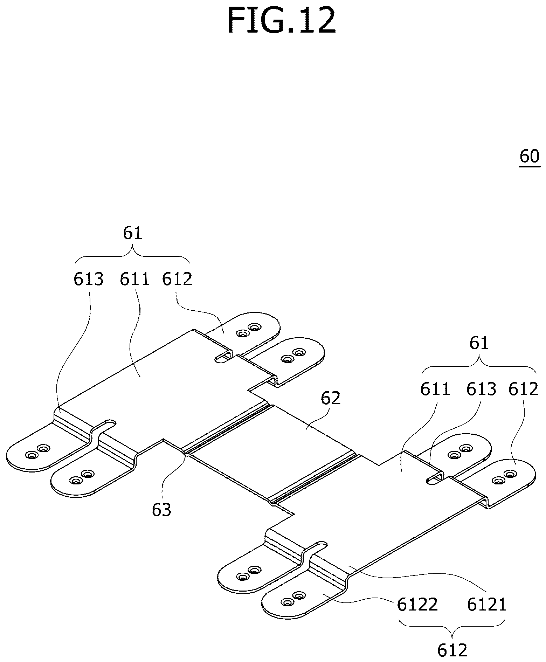

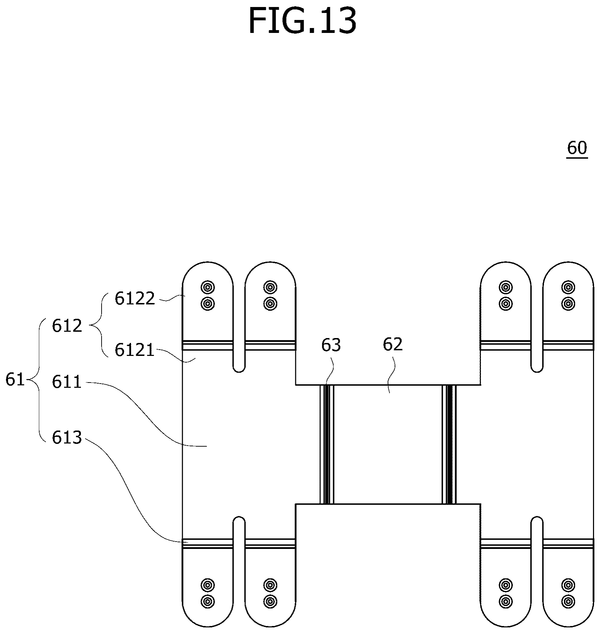

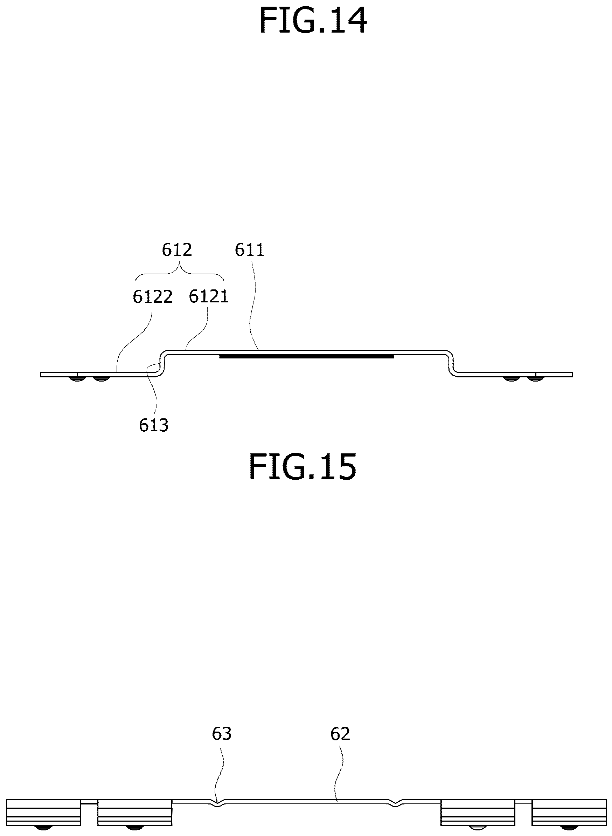

FIG. 12 is a perspective view schematically illustrating a third bus bar according to an embodiment of the present disclosure; and FIG. 13 is a top view schematically illustrating the third bus bar according to an embodiment of the present disclosure. FIG. 14 is a side view schematically illustrating a third serial part according to an embodiment of the present disclosure; and FIG. 15 is a side view schematically illustrating a third connection part according to an embodiment of the present disclosure. Referring to FIG. 6 and FIGS. 12 to 15, in an embodiment, the third bus bar 60 includes a third serial part 61, a third connection part 62, and a third adjustment part 63.

In an embodiment, a pair of third serial parts 61 may connect the first positive electrode terminals 21 and the second negative electrode terminals 32 in series. The third serial parts 61 may connect upper portions of the first battery cells 20 and the second battery cells 30 facing each other along the x-axis in series.

The third connection part 62 may connect the pair of third serial parts 61. The third connection part 62 may be disposed between the pair of third serial parts 61. In an embodiment, the third connection part 62 may be integrally formed with the third serial parts 61 and may be electrically linked, or connected, to surfaces thereof. In an embodiment, a portion of the third connection part 62 may be electrically linked to a circuit board, such as a PCM or a BMS.

In an embodiment, the third serial parts 61 may each include a third serial center plate 611, a third serial link plate 612, and a third link adjustment part 613.

The third serial center plate 611 may be disposed above the first battery cells 20 and the second battery cells 30. The third serial center plate 611 may be disposed above a space between the first battery cells 20 and the second battery cells 30 facing each other along the x-axis.

One or more third serial link plates 612 may extend to both, or opposite, sides from the third serial center plate and may be linked, or connected, to the first positive electrode terminals 21 and the second negative electrode terminals 32. Two third serial link plates 612 may be disposed at both, or opposite, sides of the third serial center plate 611 and spaced apart from one another. Two third serial link plates 612 extending from the third serial center plate 611 in a direction opposite to the third direction may be linked, or connected, to the first positive electrode terminals 21 of the first battery cells 20. Two third serial link plates 612 extending from the third serial center plate 611 in the third direction may be linked, or connected, to the second negative electrode terminals 32 of the second battery cells 30.

The third link adjustment part 613 may be formed on the third serial link plates 612 and may have a bent shape to be height-adjustable. In an embodiment, the third link adjustment part 613 may be formed in a process of molding the third serial link plates 612. In an embodiment, the third link adjustment part 613 may be formed by postprocessing after molding of the third serial link plates 612.

The third serial link plates 612 may each include a first link plate 6121 and a second link plate 6122. With the third link adjustment part 613 as a boundary, the first link plate 6121 extending from the third serial center plate 611 may be disposed at a side, and the second link plate 6122 linked to the first battery cell 20 or the second battery cell 30 may be disposed at another side. The third link adjustment part 613 may be formed to be inclined downward from the first link plate 6121. In this way, the second link plate 6122 may be disposed lower than the first link plate 6121. A height of the first link plate 6121 may be adjusted by adjusting an angle of inclination of the third link adjustment part 613.

One or more third adjustment parts 63 may be formed on the third connection part 62 and may have a bent shape to be height-adjustable. The third adjustment parts 63 may be disposed on edges of both, or opposite, sides of the third connection part 62. That is, the third adjustment parts 63 may be disposed on ends of the third connection part 62 that are connected to the third serial parts 61. An upper side surface of the third connection part 62 that is disposed between a pair of third adjustment parts 63 may be a welding target region afterwards.

In an embodiment, the third adjustment parts 63 may be molded in a process of molding the third connection part 62. In an embodiment, the third adjustment parts 63 may be formed by postprocessing after the molding of the third connection part 62. In an embodiment, the third adjustment parts 63 may each form or define a U-shaped bend or a V-shaped bend. Such a bent structure of the third adjustment parts 63 may be height-adjustable by being deformed due to an external force.

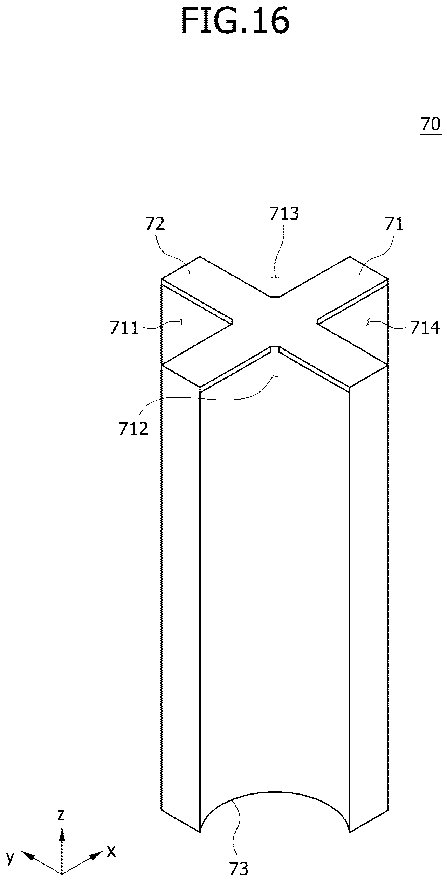

FIG. 16 is a perspective view schematically illustrating a block according to an embodiment of the present disclosure. Referring to FIGS. 6, 7, and 16, the battery pack 1 according to an embodiment of the present disclosure may further include a block 70. The block 70 may provide support to partition the plurality of first battery cells 20 and the plurality of second battery cells 30.

In an embodiment, the block 70 may be molded using a resin material, and the first battery cells 20 and the second battery cells 30 may be separately disposed due to the block 70. In an embodiment, two first battery cells 20 and two second battery cells 30 may be disposed on a single block 70.

The block 70 may include a first block 71, a second block 72, and a third block 73.

The first block 71 may have a height in the first direction and a length in the second direction intersecting the first direction. The second direction may be the y-axis in FIG. 16. The second block 72 may have a height in the first direction and a length in the third direction intersecting the second direction. The third direction may be the x-axis in FIG. 16.

In an embodiment, the first block 71 and the second block 72 may have a same length and constitute a cross shape. A first space 711, a second space 712, a third space 713, and a fourth space 714 may be partitioned by the first block 71 and the second block 72.

The third block 73 may be formed between the first block 71 and the second block 72 and may accommodate each of the plurality of first battery cells 20 and the plurality of second battery cells 30. In an embodiment, the third block 73 may be integrally formed with the first block 71 and the second block 72 and may protrude to the first space 711, the second space 712, the third space 713, and the fourth space 714. A curved surface that corresponds to a surface of each of the first battery cells 20 and the second battery cells 30 may be formed on the third block 73.

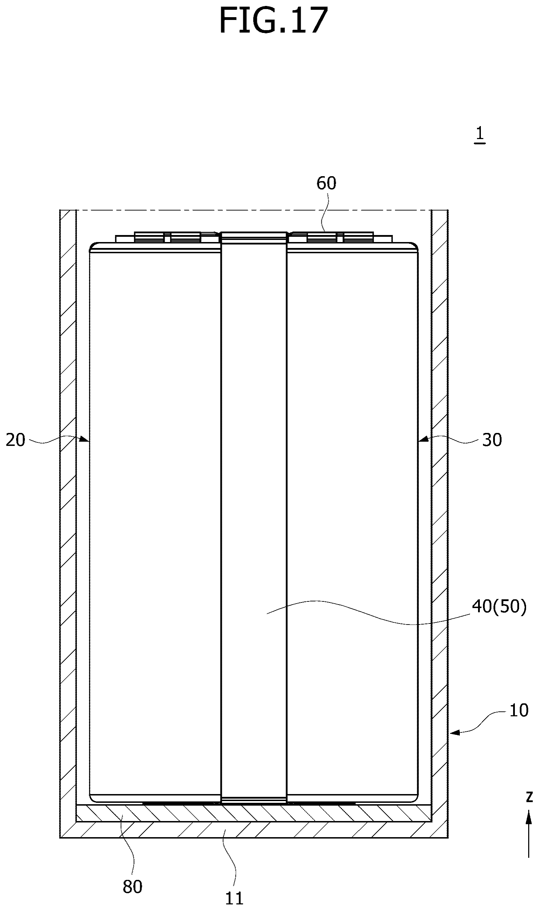

FIG. 17 is a view in which an elastic member is included in a battery pack according to an embodiment of the present disclosure. Referring to FIG. 17, the battery pack 1 according to an embodiment of the present disclosure may further include an elastic member 80. The elastic member 80 may be provided in the housing 10 and may support the first battery cells 20 and the second battery cells 30 to compensate for heights thereof.

In an embodiment, the elastic member 80 may include a rubber or foam material. When a pressure is a certain (e.g., predetermined) pressure or greater, the elastic member 80 may contract to eliminate or substantially eliminate a height difference between the first battery cells 20 and the second battery cells 30.

The elastic member 80 may be attached or coupled to an upper side surface of a bottom portion 11 of the housing 10. In an embodiment, two first battery cells 20 and two second battery cells 30 may be seated on the elastic member 80. The elastic member 80 may apply an external force to at least one or more of the first battery cells 20 and the second battery cells 30 to induce the heights of upper sides thereof to be the same. That is, the elastic member 80 may compensate for the positions of the first battery cells 20 and the second battery cells 30 in the z-axis direction.

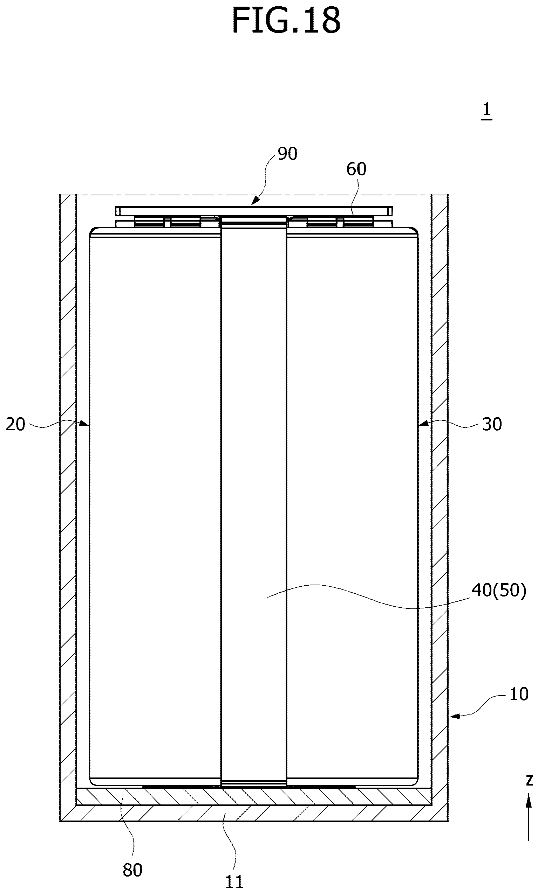

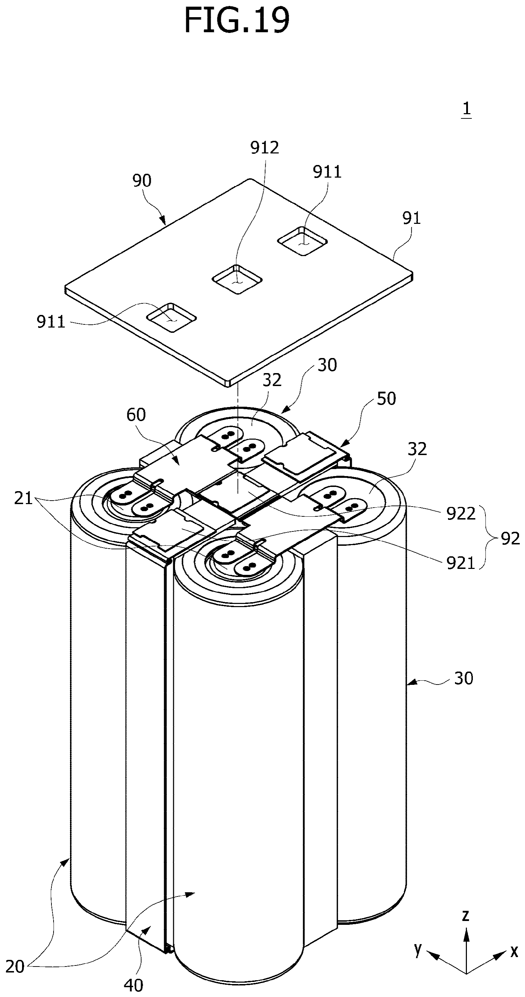

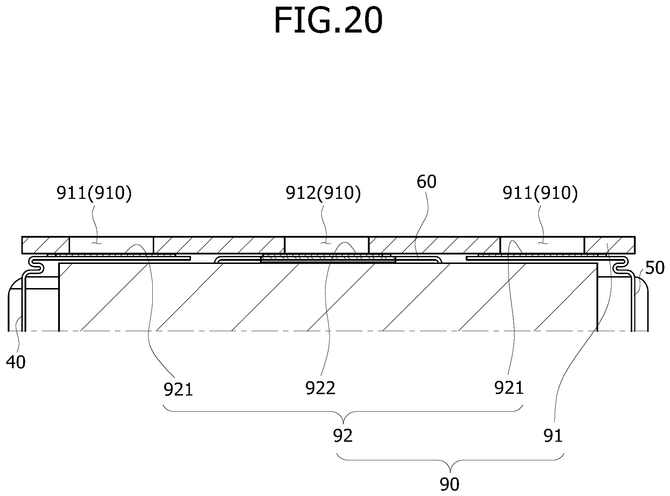

FIG. 18 is a view in which a connection body is included in a battery pack according to an embodiment of the present disclosure; FIG. 19 is a perspective view schematically illustrating a state before welding and coupling of the connection body according to an embodiment of the present disclosure; and FIG. 20 is a cross-sectional view schematically illustrating a state after welding and coupling of the connection body according to an embodiment of the present disclosure. Referring to FIGS. 18 to 20, the battery pack 1 according to an embodiment of the present disclosure may further include a connection body 90.

In an embodiment, the connection body 90 may be seated on the first bus bar 40, the second bus bar 50, and the third bus bar 60 and may be laser-welded thereto. In an embodiment, peaks of the first bus bar 40, the second bus bar 50, and the third bus bar 60 may be the same, and laser welding to the first bus bar 40, laser welding to the second bus bar 50, and laser welding to the third bus bar 60 may be performed concurrently (e.g., simultaneously).

In an embodiment, the connection body 90 may be a circuit board, such as a PCM or a BMS. The connection body 90 may include a connection substrate 91 and a connection tab 92.

The connection substrate 91 may include any of various circuits and may have substrate holes 910 formed therein for laser welding. In an embodiment, the substrate holes 910 may include a pair of first holes 911 neighboring each other and a second hole 912 disposed between the first holes 911. The connection tab 92 may be mounted on the connection substrate 91 and may be brought into contact with the first bus bar 40, the second bus bar 50, and the third bus bar 60 and laser-welded thereto.

The connection tab 92 may be mounted on the connection substrate 91 and may be laser-welded to each of the first bus bar 40, the second bus bar 50, and the third bus bar 60. In an embodiment, the connection tab 92 may include first tabs 921 covering the first holes 911 and a second tab 922 covering the second hole 912. The first tabs 921 may be in contact with the first parallel extension part 42 of the first bus bar 40 and the second parallel extension part 52 of the second bus bar 50. The second tab 922 may be in contact with the third connection part 62 of the third bus bar 60.

In a state in which two first battery cells 20 and two second battery cells 30 are partitioned and supported by the block 70, the first bus bar 40 connects the first negative electrode terminals 22 disposed on the lower portions of the first battery cells 20 in parallel, and the second bus bar 50 connects the second positive electrode terminals 31 disposed on the lower portions of the second battery cells 30 in parallel. The third bus bar 60 connects the first positive electrode terminals 21 disposed on the upper portions of the first battery cells 20 and the second negative electrode terminals 32 disposed on the upper portions of the second battery cells 30 in series. In an embodiment, the third connection part 62 of the third bus bar 60 is disposed between the first parallel extension part 42 of the first bus bar 40 and the second parallel extension part 52 of the second bus bar 50.

One or more bent regions are disposed on the first bus bar 40, the second bus bar 50, and the third bus bar 60, and a displacement of each of the first bus bar 40, the second bus bar 50, and the third bus bar 60 is adjustable. In an embodiment, the displacement may be adjusted such that an upper side surface of the first parallel extension part 42, an upper side surface of the second parallel extension part 52, and an upper side surface of the third connection part 62 are disposed to be collinear.

When the heights of the first parallel extension part 42, the second parallel extension part 52, and the third connection part 62 match, the connection tab 92 mounted on the connection substrate 91 comes into surface contact with each of the first parallel extension part 42, the second parallel extension part 52, and the third connection part 62.

In an embodiment, when the connection tab 92 is in surface contact with each of the first parallel extension part 42, the second parallel extension part 52, and the third connection part 62, a welding and coupling process may be performed therefor concurrently (e.g., simultaneously) or sequentially through laser welding.

In the battery pack 1 according to one or more embodiments of the present disclosure, the heights of the upper portions of the first bus bar 40 connecting the plurality of first battery cells 20 in parallel, the second bus bar 50 connecting the plurality of second battery cells 30 in parallel, and the third bus bar 60 connecting each of the first battery cells 20 and the second battery cells 30 in series can be matched through displacement adjustment to improve workability of subsequent processes.

In the battery pack 1 according to one or more embodiments of the present disclosure, when flatness of the first bus bar 40, flatness of the second bus bar 50, and flatness of the third bus bar 60 match, even if the connection body 90 is seated thereon through an automated process, contact between the connection body 90 and each of the first bus bar 40, the second bus bar 50, and the third bus bar 60 is stably maintained, and, thus, laser welding can be performed without an additional process for maintaining a contact state.

In a battery pack according to one or more embodiments of the present disclosure, heights of upper portions of a first bus bar connecting a plurality of first battery cells in parallel, a second bus bar connecting a plurality of second battery cells in parallel, and a third bus bar connecting each of the first battery cells and the second battery cells in series can be matched through displacement adjustment to improve workability of subsequent processes.

In the battery pack according to one or more embodiments of the present disclosure, when flatness of the first bus bar, flatness of the second bus bar, and flatness of the third bus bar match, even if a connection body is seated thereon through an automated process, contact between the connection body and each of the first bus bar, the second bus bar, and the third bus bar is stably maintained, and, thus, laser welding can be performed without an additional process for maintaining a contact state.

However, aspects and effects obtainable through the present disclosure are not limited to the above aspects and effects, and other technical aspects and effects that are not mentioned will be clearly understood by those skilled in the art from the description of the present disclosure.

While the present disclosure has been described with reference to some embodiments shown in the drawings, these embodiments are merely illustrative, and it is to be understood that various modifications and equivalent other embodiments can be derived by those skilled in the art on the basis of the embodiments.

## Claims

1. A bus bar comprising:
a first parallel connection part; and
a first parallel extension part extending from the first parallel connection part in a first direction,
wherein the first parallel connection part comprises a first parallel center plate, a first parallel link plate extending in parallel to a second direction, intersecting the first direction, from the first parallel center plate, and a first link adjustment part on the first parallel link plate to be length-adjustable in the second direction.

2. The bus bar as claimed in claim 1, wherein the first link adjustment part defines a U-shaped or V-shaped bend.

3. The bus bar as claimed in claim 1 or claim 2, wherein the first parallel extension part comprises:
a first parallel side plate connected to the first parallel connection part and arranged parallel to the first direction;
a first parallel upper plate extending from the first parallel side plate and arranged to intersect the first parallel side plate; and
a first side plate adjustment part on the first parallel side plate to be length-adjustable in the first direction.

4. The bus bar as claimed in claim 3, wherein the first side plate adjustment part is bent in a zigzag shape.

5. A battery pack comprising:
a housing;
a plurality of first battery cells accommodated in the housing and each comprising a first positive electrode terminal and a first negative electrode terminal;
a plurality of second battery cells accommodated in the housing and each comprising a second positive electrode terminal and a second negative electrode terminal;
a first bus bar connecting the first negative electrode terminals of the plurality of first battery cells;
a second bus bar connecting the second positive electrode terminals of the plurality of second battery cells; and
a third bus bar connecting the first positive electrode terminals of the first battery cells and the second negative electrode terminals of the second battery cells,
wherein at least one of the first bus bar, the second bus bar, or the third bus bar is deformable according to positions of the first battery cells and the second battery cells.

6. The battery pack as claimed in claim 5, wherein
the first positive electrode terminals and the second negative electrode terminals are located toward a side in a first direction, and
the first negative electrode terminals and the second positive electrode terminals are located toward another side in the first direction.

7. The battery pack as claimed in claim 6, wherein the first bus bar comprises:
a first parallel connection part connecting the first negative electrode terminals, which neighbor each other, in parallel; and
a first parallel extension part extending from the first parallel connection part in the first direction.

8. The battery pack as claimed in claim 7, wherein
the first battery cells are arranged in a second direction intersecting the first direction, and
the first parallel connection part comprises a first parallel center plate, a first parallel link plate extending in parallel to the second direction from the first parallel center plate and linked to the first negative electrode terminals, and a first link adjustment part on the first parallel link plate to be length-adjustable in the second direction.

9. The battery pack as claimed in claim 7 or claim 8, wherein the first parallel extension part comprises:
a first parallel side plate connected to the first parallel connection part and arranged parallel to the first direction;
a first parallel upper plate extending from the first parallel side plate and arranged to intersect the first parallel side plate; and
a first side plate adjustment part on the first parallel side plate to be length-adjustable in the first direction.

10. The battery pack as claimed in any one of claims 6 to 9, wherein the second bus bar comprises:
a second parallel connection part connecting the second positive electrode terminals, which neighbor each other, in parallel; and
a second parallel extension part extending from the second parallel connection part in the first direction.

11. The battery pack as claimed in claim 10, wherein
the plurality of second battery cells are arranged in the second direction intersecting the first direction; and
the second parallel connection part comprises a second parallel center plate, a second parallel link plate extending in parallel to the second direction from the second parallel center plate and linked to the second positive electrode terminals, and a second link adjustment part on the second parallel link plate to be length-adjustable in the second direction.

12. The battery pack as claimed in claim 10 or claim 11, wherein the second parallel extension part comprises:
a second parallel side plate connected to the second parallel connection part and arranged parallel to the first direction;
a second parallel upper plate extending from the second parallel side plate and arranged to intersect the second parallel side plate; and
a second side plate adjustment part on the second parallel side plate to be length-adjustable in the first direction.

13. The battery pack as claimed in any one of claims 6 to 12, wherein the third bus bar comprises:
a plurality of third serial parts connecting the first positive electrode terminals and the second negative electrode terminals in series;
a third connection part connecting the plurality of third serial parts; and
one or more third adjustment parts on the third connection part to be length-adjustable in the second direction intersecting the first direction.

14. The battery pack as claimed in claim 13, wherein
the first battery cells and the second battery cells are arranged to face each other in a third direction intersecting the first direction and the second direction, and
the third serial parts each comprise a third serial center plate, a third serial link plate extending in parallel to the third direction from the third serial center plate and linked to each of the first positive electrode terminals and the second negative electrode terminals, and a third link adjustment part on the third serial link plate to be length-adjustable in the third direction.

15. The battery pack as claimed in any one of claims 5 to 14, further comprising an elastic member in the housing and supporting the plurality of first battery cells and the plurality of second battery cells to compensate for heights thereof.
